# EUROPEAN PATENT SPECIFICATION

(11) **EP 2 149 712 B1**
(45) Date of publication and mention of the grant of the patent: **11.05.2011**
(21) Application number: 08290729.6
(22) Date of filing: 28.07.2008
(51) Int. Cl.: F04D 29/28, F04D 29/30, F04D 29/66, H02K 9/06

(54) **Bidirectional centrifugal fan**
Bidirektionales Radialgebläse
Ventilateur centrifuge bidirectionnel

(43) Date of publication of application: 03.02.2010
(73) Proprietor: Bombardier Transportation GmbH, 10785 Berlin (DE)
(72) Inventor: Sima, Mikael, 18335 Taeby (SE); Orrenius, Ulf, 18335 Taeby (SE)
(74) Representative: Novagraaf Technologies

(56) References cited:
- EP-A- 1 544 474
- DE-A- 163 003
- DE-C- 662 032
- FR-A- 2 595 417
- US-A- 1 882 961

## Description

### TECHNICAL FIELD OF THE INVENTION

The invention relates to a bidirectional centrifugal fan, and in particular a centrifugal fan for cooling a traction motor of a rail vehicle.

### BACKGROUND ART

Three types of cooling principles are common for electric traction motors: water cooling, 'forced ventilation' in which an external electric fan is used and 'self-ventilation' with a fan directly mounted to the motor shaft. As the third cooling system is the simplest and most robust principle, although with limited cooling capacity, it dominates the low speed vehicle segment i.e. metros and light rail vehicles, but it is also increasingly popular for regional and inter-city vehicles.

Unfortunately the 'self-ventilated' motor concept is rather noisy, producing sound powers typically in the range 105-115 dBA at full motor speed, making the motor cooling system the dominating full speed noise source in certain applications. Both interior and exterior noise levels may be significantly affected.

The rotor must normally be able to rotate in both directions. The standard solution is to apply a fan with straight radial blades. However, the air approaching the blades will have a significant flow angle relative to the blades, which causes large separation of the flow around the forward edge of the blades, which is highly undesirable both from acoustical and aerodynamic point of view. The fan becomes inefficient as an air-pump.

Previous solutions to the present problem include application of a silencer system. However, such solutions introduce additional pressure drop leading to reduced flow. In addition, these solutions are often too bulky to fit in the limited space around the motor. Better would be to improve the flow about the leading edge of the fan blades and thereby reduce the noise and improve the fan efficiency.

A centrifugal cooling fan with deformable blades is known from US-A-2 370 600. To prevent heavy increase of the cooling air flow at increasing speed, the fixed fan blades of the cooling air fan of the motor, which fan blades thereby operate with a constant angle of incidence, are provided with flexible extension parts. At increasing speed of the motor, these flexible parts are bent more and more outwards in a radial direction by the increasing centrifugal force and hence throttle the inlet openings of the fan to an increasing extent. However, this known solution has considerable disadvantages. It is difficult in practice to design the flexible parts of the fan blades such that they are mutually identical and at all speeds are bent out to exactly the same extent. For this reason, an uncontrollable unbalance of a cooling fan of this kind will easily arise. The service life and reliability of such a cooling fan also tend to become poor, among other things because vibrations of the flexible parts easily arise, which eventually leads to fatigue and fracture. Moreover, this fan is not adapted to bidirectional motors.

A centrifugal cooling fan for electric motors with an impeller having a plurality of stiff fan blades is described in WO9105397. Each blade is rotatably arranged around a turning axis substantially parallel to the rotary axis of the fan. The blades are arranged in such a way that the centrifugal force on the blade, caused by the rotation of the fan, strives to turn the blade around the turning axis in such a way that the angle of incidence of the blade is reduced. Further, the fan has spring members, which are adapted to exert on the blade a torque which counteracts the turning of the blade caused by the centrifugal force. The blades are arranged such that the radially inner edge of each blade is positioned before the outer edge of the same blade in the direction of rotation. This fan is not adapted to bidirectional motors.

A lightweight impeller for a centrifugal pump is described in W09218773. The impeller comprises a disk and blades, each made of a band elements formed by a length of band and finished at each end with band loops. The loops are slipped over pins rigidly supported by the impeller disk and the band elements are stretched towards the centre of the disc by means of tensioning pin supported by the impeller disk. Thus a light-weight design is achieved and a number of flow configurations can be achieved with the same parts, since the positioning of the tensioning pin defines the general direction of the band elements and of the flow. However, the geometry of the impeller, once the tensioning pins have been positioned, is fixed. Hence, the centrifugal pump is not bidirectional.

A bidirectional fan comprising an inner rotor provided with connection means for connecting the inner rotor to a drive shaft rotating about a rotation axis an outer rotor rotating about the rotation axis and positioned radially outwards of the inner rotor, bearing means for rotating the outer rotor with respect to the inner rotor about the rotation axis between at least a first angular position and a second angular position, and blades movable between a first inclined position and a second inclined position with respect to the inner rotor when the outer rotor moves between the first angular position and the second angular position is known from FR 2 595 417 (closest prior art). The geometry of the blades, however, is less than satisfactory.

### SUMMARY OF THE INVENTION

The foregoing shortcomings of the prior art are addressed by the present invention. According to one aspect of the invention, there is provided a bidirectional centrifugal fan comprising:
- an inner rotor provided with connection means for connecting the inner rotor to a drive shaft rotating about a rotation axis;
- an outer rotor rotating about the rotation axis and positioned radially outwards of the inner rotor,
- bearing means for rotating the outer rotor with respect to the inner rotor about the rotation axis between at least a first angular position and a second angular position,
- blades movable between a first inclined position and a second inclined position with respect to the inner rotor when the outer rotor moves between the first angular position and the second angular position, the blades having a resilient flexible leading edge portion hinged to the inner rotor and a radially extending trailing edge portion fixed to the outer rotor.

The outer rotor constitute an inertia mass, which upon acceleration of the inner rotor and of the blades will cause the blades to bend. The blades can change their inclination with the speed and/or the direction of the fan rotation such that optimized aerodynamic flow conditions are reached at all times. The pressure build-up on the blades during rotation can be used to adjust the blade shape so that no external actuator is needed. The position of the outer rotor with respect to the inner rotor is stable thanks to the torque resulting from the aerodynamic pressure on the blades. By aligning the flow and blade at the leading edge the flow separation causing noise and pressure loss is removed. These benefits are gained without need for extra space. The inclination of the blades is controlled by the angular movement of the outer rotor with respect to the inner rotor. This ensures that the blades will all assume the same inclination at any point in time. Uncontrolled flapping of the blades, imbalance or vibration are therefore limited.

According to a preferred embodiment, each of the blades is associated to a radial plane of symmetry such that the second inclined position and the first Inclined position are symmetrical with respect to the radial plane of symmetry. The blades in the second inclined position form a mirror image of the blades in the first inclined position. This symmetry ensures that the fan is fully reversible, with identical behaviour in both directions of rotation.

Each blade may comprise a radially extending trailing edge portion, which is fixed to the outer rotor. This trailing edge portion is preferably not deformable and has a radial plane of symmetry, which ensures identical performance in both directions of rotation.

According to a preferred embodiment, each of the blades pivots about an associated pivot axis parallel to the axis of rotation. The blades can also be movable in translation relative to associated pivot axis. According to one embodiment, each of the blades comprises a metal band folded in two halves around a pin fixed to the inner rotor, which constitutes the pivot axis.

According to another preferred embodiment, each of the blades is associated with two abutments fixed relative to the inner rotor so that the leading edge of each of the blades abuts against one of the associated abutments in the first inclined position and against the other one of the associated abutments in the second inclined position. This alternative embodiment is simpler from design and less sensitive to fatigue of the blades, although less appealing from an aerodynamic point of view.

Abutments may be provided for limiting the angular position of the outer rotor with respect to the inner rotor. A dampening means may be added between the inner and outer rotor to dampen possible rotary vibration movement between the inner rotor and outer rotor. This friction means may involve friction plates and/or a fluid damper.

The fan comprises an air inlet proximate the leading edge portions of the blades and a radial outlet located radially outside the second rotor.

According to a second aspect of the invention, there is provided a traction motor for a rail vehicle, provided with a drive shaft and a bidirectional fan as described hereinbefore, connected to the drive shaft.

### BRIEF DESCRIPTION OF THE DRAWINGS

Other advantages and features of the invention will become more clearly apparent from the following description of a specific embodiment of the invention given as non-restrictive example only and represented in the accompanying drawings in which:
- figure 1 illustrates a section of a traction motor provided with a centrifugal fan according to one embodiment of the invention, along a lines B-B of figure 2;
- figure 2 is a cross-section of the fan of figure 1 by a plane C-C of figure 1; and
- figure 3 is a cross-section of a centrifugal fan according to another embodiment of the invention.

### DETAILED DESCRIPTION OF VARIOUS EMBODIMENTS

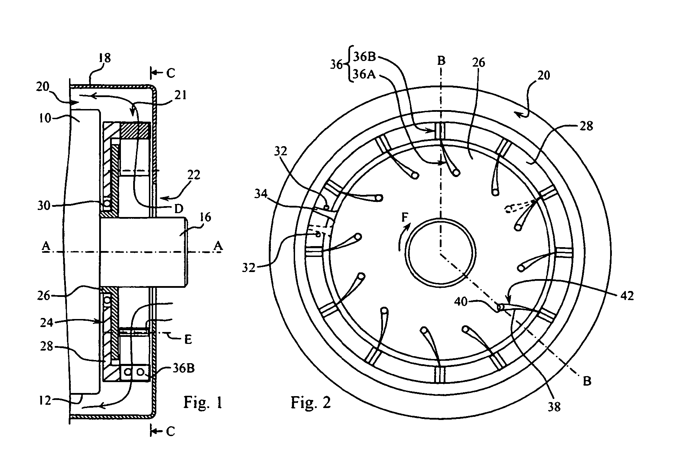

Referring to figure 1, an electric traction motor 10 for a rail vehicle is housed in a casing 12 provided with a pair of bearings (not shown) for supporting a drive shaft 16 of the motor. The motor is assumed to be arranged for operation in both directions with variable speed and may consist of, for example, a dc motor or of a frequency converter-supplied ac motor. The rotary axis of the motor shaft 16 is designated A-A in the figures. The motor casing 12 is received in a surrounding mantle 18, with provision of an air gap defining an annular volume 20 around the motor casing 12. The annular volume 20 is open at an inlet axial end 22 and at an axially opposite end (not shown). One end of the motor shaft 16 protrudes from an end wall of the motor casing 12 and is connected to a fan 24 located at the inlet end 22 of the annular volume 20.

The cooling fan 24, which is of centrifugal type, sucks fresh air into the inlet 22 and drives the cooling air through its outlet 21 and through the cooling volume 20 between the motor casing 12 and the mantle 18 past the motor. The path of the cooling airflow is schematically shown by the lines designated D in the figure. The motor casing may be provided with fins (not shown) for increasing the heat exchange.

As shown in figure 2, the fan 24 includes an inner rotor 26 mounted on the motor shaft 16 for rotation therewith about the motor shaft axis A-A, and an outer rotor 28, which is journalled on the inner rotor via a roller bearing 30, so as to be freely rotatable about the rotation axis A-A relative to the inner rotor 26 between a first and a second angular position, defined by abutment pins 32 fixed to the outer rotor and a stop 34 fixed to the inner rotor.

The fan is provided with a plurality of blades 36, twelve in the embodiment of figure 2, which extend in a general radial direction between the inner rotor and the outer rotor. The blades 36 are equally spaced along the circumference of the rotor. Each blade presents a deformable leading edge portion 36A and a rigid trailing edge portion 36B positioned radially outwards of the leading edge portion. The trailing edge portion 36B of each blade is fixed to the outer rotor 28 and extends in a direction parallel to a radial plane. Preferably, the shape of the trailing edge portion is symmetrical with respect to a radial plane. The leading edge portion 36A of each blade is made of a thin metal band 38 bent over a pivot pin 40 fixed to the inner rotor 26, the ends of the bent metal band being fixed to the trailing edge portion 36B of the blade. The bent metal band 38 defines an oblong pocket 42 for receiving the pin 40, allowing both rotation and limited translation of the blade 36 with respect to the pin 40. The pin defines a pivot axis E-E for the leading edge portion 36A of the blade, which is parallel to the rotation axis of the motor shaft.

Upon rotation of the motor shaft 16 in one direction F, the inner rotor rotates. The inertia of the outer rotor 28 causes the flexible leading edge portion 36A of the blades to bend in the direction of rotation while the outer rotor rotates in the direction opposite to F with respect to the inner rotor. When the speed or rotation increases, the bending of the blades increases until the stop 34 comes into abutment with one of the pins 32. The corresponding position of the blades is shown in full lines in figure 2. If the motor shaft rotates in the opposite position, the blades move in the opposite direction as shown in broken lines in figure 2.

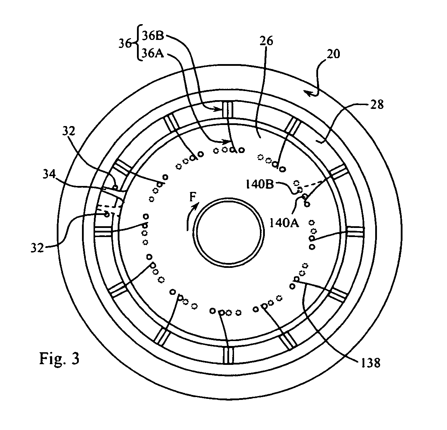

A second embodiment of the invention is shown in figure 3. This embodiment differs from the first embodiment in the way the leading edge portion of the blades is linked to the inner rotor. In all other respects, this second embodiment is identical with the first embodiment, so that similar or identical features will be referenced with identical reference numbers. In this second embodiment, each blade 36 is associated with a pair of pins 140A, 140B fixed to the inner rotor 26. When the outer rotor 28 is in the first angular position in relation to the inner rotor, the leading edge portion 36A of each blade abuts against one of the associated pins 140A. Due to the flexibility of the leading edge portion 36A of the blade, the leading edge portion assumes a first inclined position relative to the inner rotor, as depicted in full lines in figure 3. In the second angular position of rotors 26, 28, the leading edge portion 36A of each blade abuts against the other associated pin 140B and assumes a second inclined position relative to the inner rotor, which is the mirror image of the first inclined position as depicted in broken lines in figure 3. In this embodiment, the blade can be made of a simple flexible plate 138 of metal.

The invention is not limited to the embodiments described hereinbefore. The air circulation can include one or more air paths through the motor casing. The outer mantle is optional. The mechanical pivot connection between the blades and the inner rotor may can be reversed, with pins associated to the blades sliding in oblong or arcuate slides provided in the inner rotor.

The bearing 30 for rotating the outer rotor with respect to the inner rotor can be supported on the inner rotor, on the motor shaft itself or on the motor casing. The fan could also be driven by a secondary shaft driven by the motor shaft, in which case the axis of rotation of the fan, which would still coincide with the axis of rotation of the drive shaft, would not necessarily coincide with the axis of rotation of the motor shaft.

A dampening means may be added between the inner and outer rotor to dampen possible rotary vibration movement between the inner rotor and outer rotor. This friction means may involve friction plates and/or a fluid damper.

## Claims

1. A bidirectional centrifugal fan comprising:
- an inner rotor (26) provided with connection means for connecting the inner rotor to a drive shaft (16) rotating about a rotation axis (A-A);
- an outer rotor (28) rotating about the rotation axis and positioned radially outwards of the inner rotor,
- bearing means (30) for rotating the outer rotor with respect to the inner rotor about the rotation axis between at least a first angular position and a second angular position,
- blades (36) movable between a first inclined position and a second inclined position with respect to the inner rotor when the outer rotor moves between the first angular position and the second angular position,
**characterised in that** the blades have a resilient flexible leading edge portion (36A) linked to the inner rotor and a radially extending trailing edge portion (36B) fixed to the outer rotor.

2. The bidirectional fan of claim 1, wherein each of the blades (36) is associated to a radial plane of symmetry such that the second inclined position and the first inclined position are symmetrical with respect to the radial plane of symmetry.

3. The bidirectional fan of claim 1 or claim 2, wherein each of the blades (36) pivots about an associated pivot axis (E-E) fixed relative to the inner rotor and parallel to the axis of rotation.

4. The bidirectional fan of claim 3, wherein each of the blades (36) is movable in translation relative to associated pivot axis (E-E).

5. The bidirectional fan of claim 1 or claim 2, wherein each of the blades is associated with two associated abutments (140A, 140B) fixed relative to the inner rotor so that the leading edge of each of the blades abuts against one of the associated abutments in the first inclined position and against the other one of the associated abutments in the second inclined position.

6. The bidirectional fan of any one of the preceding claims, wherein each trailing edge portion (36B) is stiff.

7. The bidirectional fan of any one of the preceding claims, wherein each of the blades (36) comprises a metal band (38) folded in two halves around a pin (40) fixed to the inner rotor.

8. The bidirectional fan of any one of the preceding claims, further comprising abutments (34) for limiting the angular position of the outer rotor with respect to the inner rotor.

9. The bidirectional fan of any one of the preceding claims, further comprising dampening means for dampening the rotation of the outer rotor with respect to the inner rotor.

10. A traction motor (10) for a rail vehicle, provided with a drive shaft (16) and a bidirectional fan (24) according to any one of the preceding claims, connected to the drive shaft.

11. The traction motor of claim 10, further comprising an air inlet (22) proximate the leading edge portions of the blades.

12. The traction motor of claim 10 or claim 11, further comprising a radial outlet (21) located radially outwards of the second rotor.

## Patentansprüche

1. Bidirektionaler Radiallüfter, umfassend:
- einen inneren Rotor (26), der mit einer Verbindungseinrichtung zum Verbinden des inneren Rotors mit einer Antriebswelle (16) versehen ist, die sich um eine Drehachse (A-A) dreht,
- einen äußeren Rotor (28), der sich um die Drehachse dreht und radial außerhalb des inneren Rotors positioniert ist,
- Lagermittel (30) zum Drehen des äußeren Rotors bezüglich des inneren Rotor um die Drehachse zwischen wenigstens einer ersten Winkelposition und einer zweiten Winkelposition,
- Schaufeln (36), die zwischen einer ersten Neigungsstellung und einer zweiten Neigungsstellung bezüglich des inneren Rotors beweglich sind, wenn sich der äußere Rotor zwischen der ersten Winkelposition und der zweiten Winkelposition bewegt,
**dadurch gekennzeichnet, dass** die Schaufeln einen federnd flexiblen Vorderkantenabschnitt (36A), der mit dem inneren Rotor verbunden ist, und einen an dem äußeren Rotor fixierten radial verlaufenden Hinterkantenabschnitt (36B) aufweisen.

2. Bidirektionaler Lüfter nach Anspruch 1, wobei jede der Schaufeln (36) einer radialen Symmetrieebene zugeordnet ist, sodass die zweite Neigungsstellung und die erste Neigungsstellung in Bezug auf die radiale Symmetrieebene symmetrisch sind.

3. Bidirektionaler Lüfter nach Anspruch 1 oder Anspruch 2, wobei jede der Schaufeln (36) um eine zugeordnete Schwenkachse (E-E) geschwenkt wird, die relativ zu dem inneren Rotor fixiert ist und parallel zu der Drehachse verläuft.

4. Bidirektionaler Lüfter nach Anspruch 3, wobei jede der Schaufeln (36) im Verhältnis zu der zugeordneten Schwenkachse (E-E) translatorisch beweglich ist.

5. Bidirektionaler Lüfter nach Anspruch 1 oder Anspruch 2, wobei jede der Schaufeln zwei zugehörigen Widerlagern (140A, 140B) zugeordnet ist, die bezüglich des inneren Rotors fixiert sind, sodass sich die Vorderkante jeder Schaufel in der ersten Neigungsstellung an einem der zugeordneten Widerlager abstützt und sich in der zweiten Neigungsstellung an dem anderen der zugeordneten Widerlager abstützt.

6. Bidirektionaler Lüfter nach einem der vorhergehenden Ansprüche, wobei jeder Hinterkantenabschnitt (36B) steif ist.

7. Bidirektionaler Lüfter nach einem der vorhergehenden Ansprüche, wobei jede der Schaufeln (36) ein Metallband (38) aufweist, das um einen an dem inneren Rotor fixierten Stift (40) herum in zwei Hälften gefaltet ist.

8. Bidirektionaler Lüfter nach einem der vorhergehenden Ansprüche, der ferner Widerlager (34) zum Begrenzen der Winkelposition des äußeren Rotors in Bezug auf den inneren Rotor aufweist.

9. Bidirektionaler Lüfter nach einem der vorhergehenden Ansprüche, der ferner Dämpfungsmittel zum Dämpfen der Drehung des äußeren Rotors in Bezug auf den inneren Rotor aufweist.

10. Fahrmotor (10) für ein Schienenfahrzeug, der mit einer Antriebswelle (16) und einem mit der Antriebswelle verbundenen bidirektionalen Lüfter (24) nach einem der vorhergehenden Ansprüche versehen ist.

11. Fahrmotor nach Anspruch 10, der ferner einen Lufteinlass (22) aufweist, der sich in der Nähe des Vorderkantenabschnitts der Schaufeln befindet.

12. Fahrmotor nach Anspruch 10 oder Anspruch 11, der ferner einen radialen Auslass (21) aufweist, der sich radial außerhalb des zweiten Rotors befindet.

## Revendications

1. Ventilateur centrifuge bidirectionnel comprenant :
- un rotor interne (26) muni d'un moyen de raccordement pour raccorder le rotor interne à un arbre d'entraînement (16) tournant autour d'un axe de rotation (A-A) ;
- un rotor externe (28) tournant autour de l'axe de rotation et positionné radialement vers l'extérieur du rotor interne,
- un moyen de palier (30) pour faire tourner le rotor externe par rapport au rotor interne autour de l'axe de rotation entre au moins une première position angulaire et une seconde position angulaire,
- des pales (36) mobiles entre une première position inclinée et une seconde position inclinée par rapport au rotor interne lorsque le rotor externe se déplace entre la première position angulaire et la seconde position angulaire,
**caractérisé en ce que** les pales ont une portion de bord d'attaque flexible résiliente (36A) liée au rotor interne et une portion de bord de fuite en extension radiale (36B) fixée au rotor externe.

2. Ventilateur bidirectionnel selon la revendication 1, dans lequel chacune des pales (36) est associée à un plan de symétrie radial de sorte que la seconde position inclinée et la première position inclinée sont symétriques par rapport au plan de symétrie radial.

3. Ventilateur bidirectionnel selon la revendication 1 ou la revendication 2, dans lequel chacune des pales (36) pivote autour d'un axe de pivotement (E-E) associé fixe par rapport au rotor interne et parallèle à l'axe de rotation.

4. Ventilateur bidirectionnel selon la revendication 3, dans lequel chacune des pales (36) est mobile en translation par rapport à l'axe de pivotement (E-E) associé.

5. Ventilateur bidirectionnel selon la revendication 1 ou la revendication 2, dans lequel chacune des pales (36) est associée à deux butées (140A, 140B) associées fixes par rapport au rotor interne de sorte que le bord d'attaque de chacune des pales bute contre l'une des butées associées dans la première position inclinée et contre l'autre butée associée dans la seconde position inclinée.

6. Ventilateur bidirectionnel selon l'une quelconque des revendications précédentes, dans lequel chaque portion de bord de fuite (36B) est rigide.

7. Ventilateur bidirectionnel selon l'une quelconque des revendications précédentes, dans lequel chacune des pales (36) comprend une bande métallique (38) pliée en deux moitiés autour d'une goupille (40) fixée au rotor interne.

8. Ventilateur bidirectionnel selon l'une quelconque des revendications précédentes, comprenant en outre des butées (34) pour limiter la position angulaire du rotor externe par rapport au rotor interne.

9. Ventilateur bidirectionnel selon l'une quelconque des revendications précédentes, comprenant en outre un moyen d'amortissement pour amortir la rotation du rotor externe par rapport au rotor interne.

10. Moteur de traction (10) pour un véhicule sur rail, muni d'un arbre d'entraînement (16) et d'un ventilateur bidirectionnel (24) selon l'une quelconque des revendications précédentes, raccordé à l'arbre d'entraînement.

11. Moteur de traction selon la revendication 10, comprenant en outre une admission d'air (22) à proximité des portions de bord d'attaque des pales.

12. Moteur de traction selon la revendication 10 ou la revendication 11, comprenant en outre un refoulement radial (21) situé radialement vers l'extérieur du second rotor.
